# EUROPÄISCHE PATENTSCHRIFT

(11) **EP 3 458 288 B1**
(45) Veröffentlichungstag und Bekanntmachung des Hinweises auf die Patenterteilung: **02.09.2020**
(21) Anmeldenummer: 17727121.0
(22) Anmeldetag: 16.05.2017
(51) Int. Cl.: B60D 5/00, B61D 17/22, B62D 47/02

(54) **VERWENDUNG EINES MEHRSCHICHTIGEN FLÄCHENGEBILDES AUFWEISEND ZUMINDEST EIN TEXTILES FLÄCHENGEBILDE, ÜBERGANGSELEMENT AUFWEISEND EIN DERARTIGES MEHRSCHICHTIGES FLÄCHENGEBILDE, SOWIE FAHRZEUG, FLUGGASTBRÜCKE ODER -TREPPE MIT EINEM DERARTIGEN ÜBERGANGSELEMENT**
USE OF A MULTI-LAYERED SHEET MATERIAL HAVING AT LEAST ONE TEXTILE FABRIC, PASSAGE ELEMENT HAVING SUCH A MULTI-LAYERED SHEET MATERIAL, AND VEHICLE, PASSENGER BOARDING BRIDGE OR PASSENGER BOARDING STEPS HAVING SUCH A PASSAGE ELEMENT
UTILISATION D'UNE STRUCTURE PLATE MULTICOUCHE PRÉSENTANT AU MOINS UNE STRUCTURE PLATE TEXTILE, ÉLÉMENT DE TRANSITION PRÉSENTANT LADITE STRUCTURE PLATE MULTICOUCHE, AINSI QUE VÉHICULE, PASSERELLE OU ESCALIER POUR PASSAGERS MUNI DUDIT ÉLÉMENT DE TRANSITION

(30) Priorität: 17.05.2016 DE 102016109070
(43) Veröffentlichungstag der Anmeldung: 27.03.2019
(73) Patentinhaber: Hübner GmbH & Co. KG, 34123 Kassel (DE)
(72) Erfinder: BUSCH, Thomas, 34359 Reinhardshagen (DE); WIEGREFE, Andreas, 36039 Fulda (DE); WERNER, Uwe, 01979 Lauchhammer (DE); HANISCH, Stefan, 03048 Cottbus (DE)
(74) Vertreter: Patent- und Rechtsanwälte Dr. Solf & Zapf
(86) Internationale Anmeldenummer: PCT/EP2017/061776
(87) Internationale Veröffentlichungsnummer: WO 2017/198683

(56) Entgegenhaltungen:
- EP-A1- 0 297 936
- DE-C- 593 970
- US-A- 4 196 755

## Beschreibung

Die vorliegende Erfindung betrifft die Verwendung eines mehrschichtigen Flächengebildes, welches einen Festigkeitsträger aufweist, der zumindest einseitig, vorzugsweise beidseitig, mit einer Polymerschicht beschichtet ist, wobei der Festigkeitsträger zumindest ein textiles Flächengebilde aufweist, als Balgwandung eines Übergangsbalgs, insbesondere eines Übergangsbalgs in Form eines Wellen- oder Faltenbalgs.

Die Erfindung betrifft ferner ein Übergangselement, insbesondere einen Übergangsbalg, für Bauteile, Fahrzeuge, Gebäudeverbindungen oder für Fluggastbrücken oder -treppen, aufweisend zumindest ein derartiges mehrschichtiges Flächengebilde, wobei das Übergangselement zum Schutz eines Übergangs von zwei relativ zueinander beweglich miteinander verbundenen Fahrzeugteilen oder Bauteilen oder von zwei Gebäudeteilen, insbesondere von zwei gelenkig miteinander verbundenen Fahrzeugteilen oder Bauteilen, vor äußeren Einflüssen dient.

Außerdem betrifft die Erfindung ein Fahrzeug, eine Gebäudeverbindung sowie eine Fluggastbrücke oder-treppe mit einem derartigen Übergangselement, insbesondere einem Übergangsbalg.

Es ist bekannt, als Übergangsschutz für den Übergang zwischen den einzelnen, gelenkig miteinander verbundenen Fahrzeugteilen eines Fahrzeuges, insbesondere eines Gelenkbusses oder eines Schienenfahrzeugs, oder als Übergangsschutz für Fluggastbrücken Übergangsbälge in Form von Falten- oder Wellenbälgen einzusetzen. Die Falten bzw. Wellen sorgen für die notwendige Dehnbarkeit in Fahrtrichtung, so dass Relativbewegungen der Fahrzeugteile bzw. der Fluggastbrückenelemente möglich sind. Die Falten- oder Wellenbälge weisen eine Balgwandung aus einem mehrschichtigen Flächengebilde mit mittigem Festigkeitsträger auf, wobei die Balgwandung zur Ausbildung der Wellen oder Falten in regelmäßigen Abständen in Balgrahmen eingespannt ist. Dazu sind die Balgrahmen im Querschnitt U-förmig ausgebildet, wobei die Balgwandung in die Öffnung der Balgrahmen eingeklemmt ist. Beispielsweise geht ein derartiger Faltenbalg aus der EP 0 698 514 B1 hervor. Das Einklemmen der Balgwandung ist aufwendig.

Die WO 2013/023634 A1 offenbart einen Wellenbalg, bei dem die Balgwandung aus zwei Festigkeitsträgern besteht, die derart miteinander verbunden sind, dass Führungen in Form von Schlaufen gebildet werden. Die Schlaufen dienen zur Aufnahme der Balgrahmen und erleichtern somit die Montage. Die Festigkeitsträger sind durch Vernähen, Verwirken, Verstricken, Verschweißen oder Verkleben miteinander verbunden.

Und aus der EP 2 091 766 B1 geht ein Faltenbalg hervor, dessen Balgwandung aus einer textilen Oberseite und einer textilen Unterseite besteht, die mit Polfäden miteinander verbunden sind. Beispielsweise handelt es sich um ein Abstandsgewebe aus zwei durch die Polfäden miteinander verbundenen Geweben (Doppelgewebe). Die Polfäden halten die Ober- und Unterseite auf Abstand und weisen in axialer Richtung des Balges Abstände zueinander auf, so dass sich Gassen bzw. Kanäle bilden. Durch die Gassen bzw. Kanäle sind die Stützrahmen des Balges durchgeführt. Das Dokument DE 593 970 C offenbart eine Verwendung eines mehrschichtigen Flächengebildes gemäß dem Oberbegriff des Anspruch 1 und ein Übergangselement gemäß dem Oberbegriff des Anspruchs 10.

Die bekannten Wellen- und Faltenbälge haben sich bewährt.

Aufgabe der vorliegenden Erfindung ist es, ein mehrschichtiges Flächengebilde für die Verwendung als Balgwandung eines gattungsgemäßen Übergangsbalgs bereit zu stellen, das einen Festigkeitsträger aufweist, der zumindest einseitig, vorzugsweise beidseitig, eine Polymerbeschichtung aufweist, und das Kanäle für die Montage der Rahmenelemente aufweist, wobei der Verlauf und die Form der Kanäle frei gestaltet werden kann und das Flächengebilde einfach und kostengünstig herstellbar ist und ein geringes Gewicht aufweist.

Weitere Aufgabe der vorliegenden Erfindung ist die Bereitstellung eines Übergangselements, insbesondere eines Übergangsbalgs, zum Schutz eines Übergangs von zwei relativ zueinander beweglich miteinander verbundenen Fahrzeugteilen oder Bauteilen, insbesondere von zwei gelenkig miteinander verbundenen Fahrzeugteilen oder Bauteilen, vor äußeren Einflüssen, wobei das Übergangselement mindestens zwei zueinander beabstandete Spannelemente aufweist, zwischen die ein Flächengebilde als Übergangselementwandung eingespannt ist.

Weitere Aufgabe ist die Bereitstellung eines Fahrzeugs oder einer Fluggastbrücke- oder treppe mit einem derartigen Übergangselement.

Die Aufgaben werden durch eine Verwendung eines mehrschichtigen Flächengebildes mit den Merkmalen von Anspruch 1, ein Übergangselement mit den Merkmalen von Anspruch 10 ein Fahrzeug mit den Merkmalen von Anspruch 14, eine Fluggastbrücke oder -treppe mit den Merkmalen von Anspruch 15 und eine Gebäudeverbindung mit den Merkmalen von Anspruch 16 gelöst.

Vorteilhafte Weiterbildungen der Erfindung sind in den sich jeweils anschließenden Unteransprüchen gekennzeichnet.

Zudem weist das Flächengebilde des Übergangselements vorzugsweise die Merkmale des gemäß der Ansprüche 3 bis 9 verwendeten Flächengebildes auf.

Im Folgenden wird die Erfindung anhand einer Zeichnung beispielhaft näher erläutert. Es zeigen:
- Figur 1:: Stark vereinfacht und sehr schematisch eine querschnittsartige Ansicht eines erfindungsgemäß verwendeten Flächengebildes
- Figur 2:: Schematisch eine Draufsicht auf ein Trägergewebe des erfindungsgemäß verwendeten Flächengebildes
- Figur 3:: Schematisch eine perspektivische Ansicht eines Wellenbalges
- Figur 4:: Schematisch eine Seitenansicht eines Übergangs von zwei Fahrzeugteilen mit einem Übergangsbalg in Form eines Faltenbalges

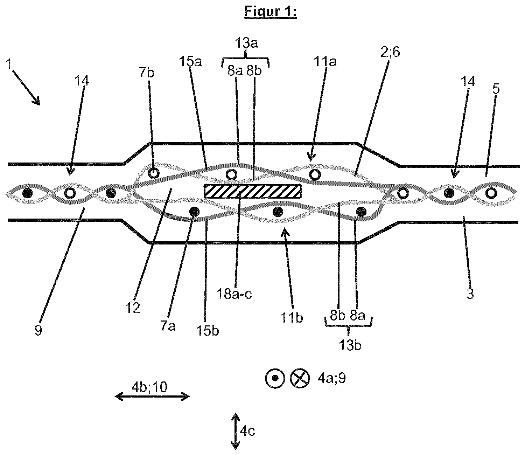

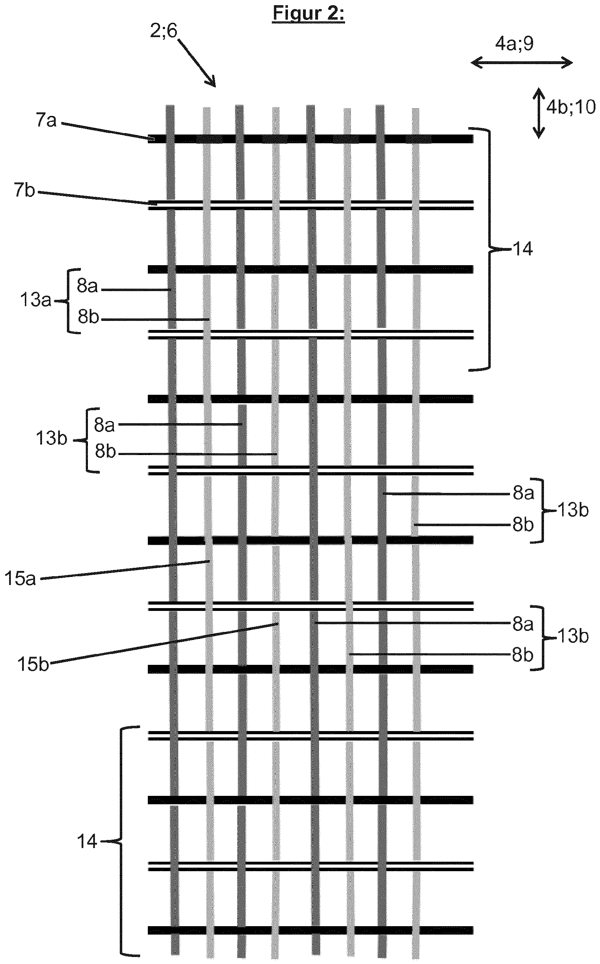

Das erfindungsgemäß verwendete mehrschichtige, flexible Flächengebilde 1 (Fig. 1 und 2) weist eine mittige, flächige Festigkeitsträgerschicht bzw. einen mittigen flächigen Festigkeitsträger 2 auf, der beidseitig eine äußere bzw. außenseitige Polymerbeschichtung 3 aufweist. Die Polymerbeschichtung 3 bildet jeweils die Außenseite des mehrschichtigen Flächengebildes 1.

Das mehrschichtige Flächengebilde 1 weist zudem eine erste Raumrichtung bzw. Flächenrichtung 4a sowie eine dazu senkrechte zweite Raumrichtung bzw. Flächenrichtung 4b auf. Bzw. das mehrschichtige Flächengebilde 1 weist eine flächenmäßige Erstreckung in die erste und zweite Flächenrichtung 4a;b auf. Zudem weist das Flächengebilde 1 eine Dickenrichtung bzw. Höhenrichtung 4c auf, welche senkrecht zu den beiden Flächenrichtungen 4a;b ist. Der flächige Festigkeitsträger 2 weist folglich ebenfalls eine flächenmäßige Erstreckung in die erste und zweite Flächenrichtung 4a;4b sowie eine höhenmäßige bzw. dickenmäßige Erstreckung in die Dickenrichtung 4c auf.

Die Polymerbeschichtung 3 besteht aus einer Polymermatrix 5, in welche vorzugsweise Füllstoffe, insbesondere flammhemmende Füllstoffe, eingebettet sind. Die Polymermatrix 5 besteht insbesondere aus einem Polymerwerkstoff bzw. Polymer gemäß DIN 7724-1993-04. Vorzugsweise besteht die Polymermatrix 5 aus einem Elastomer gemäß DIN 7724-1993-04. Elastomere sind demnach formfeste, aber elastisch verformbare Polymere, deren Glasübergangspunkt sich unterhalb der Einsatztemperatur befindet. Die Elastomere können sich bei Zug- und Druckbelastung elastisch verformen, finden aber danach wieder in ihre ursprüngliche, unverformte Gestalt zurück. Die Polymermatrix 5 besteht bevorzugt aus vulkanisiertem Kautschuk (Gummi), insbesondere aus vulkanisiertem Silikonkautschuk (Silikongummi) oder vulkanisiertem Naturkautschuk (Naturgummi), oder aus CSM (chlorsulfoniertes Polyethylen) oder EPDM (Ethylen-Propylen-Dien-Kautschuk) oder EVA (Ethylvenylacetat) oder PVC (Polyvinylchlorid) oder aus PU (Polyurethan) oder deren Gemische.

Der Festigkeitsträger 2 weist erfindungsgemäß ein Trägergewebe 6 auf. Das Trägergewebe 6 weist in an sich bekannter Weise sich in die erste Flächenrichtung 4a erstreckende Kettfäden 7a;b und die Kettfäden 7a;b kreuzende, sich parallel zur zweiten Flächenrichtung 4b erstreckende Schussfäden 8a;b auf. Die erste Flächenrichtung 4a entspricht somit einer Kettrichtung 9 und die zweite Flächenrichtung 4b entspricht somit einer Schussrichtung 10 des Trägergewebes 8. Zudem weist das Trägergewebe 6 eine Gewebeoberseite 11a und eine Gewebeunterseite 11b auf.

Bei den Kett- und Schussfäden 7a;b;8a;b handelt es sich jeweils um Monofilamentfäden oder Multifilamentfäden. Monofilamentfäden bestehen jeweils aus einem einzigen Monofilament. Multifilamentfäden bestehen aus mehreren Monofilamenten. Die Monofilamente können jeweils einstückig (monolithisch) ausgebildet sein oder eine Kern-/Mantelstruktur aufweisen. Dabei kann ein Multifilamentfaden unterschiedliche Monofilamente, z.B. aus unterschiedlichen Materialien, aufweisen.

Gemäß der Erfindung ist das Trägergewebe 6 nun derart ausgebildet, dass es zumindest einen Kanal bzw. eine Gasse bzw. eine Durchführung 12 aufweist, der bzw. die sich senkrecht zur Höhenrichtung 4c bzw. in zumindest eine der beiden Flächenrichtungen 4a;b durch das Trägergewebe 6 durch erstreckt. Vorzugsweise weist das Trägergewebe 6 mehrere Kanäle 12 auf. Die Kanäle 12 weisen zumindest ein, vorzugsweise zwei, Kanalenden auf, an denen sie jeweils an die Umgebung münden.

Die Kanäle 12 werden durch entsprechende Bindung bzw. Verwebung der Kett- und/oder Schussfäden 7a;b;8a;b erzeugt.

Gemäß einer bevorzugten Ausführungsform der Erfindung (Fig. 1 und 2) weist das Trägergewebe 6 erste und zweite Kettfäden 7a;b und erste und zweite Schussfäden 8a;b auf. Die ersten und zweiten Kettfäden 7a;b sind in Schussrichtung 10 abwechselnd angeordnet. Und die ersten und zweiten Schussfäden 8a;b sind in Kettrichtung 9 abwechselnd angeordnet. Zudem weist das Trägergewebe 6 mehrere erste und zweite Schussfädenpaare 13a;b auf, die ebenfalls in Kettrichtung 9 abwechselnd angeordnet sind. Jedes Schussfädenpaar 13a;b weist dabei jeweils einen ersten und einen zweiten Schussfaden 8a;b auf.

Das Trägergewebe 6 weist nun zum einen die Kanäle 12 und zum anderen kanalfreie Gewebebereiche 14 auf. In den kanalfreien Gewebebereichen 14 ist das Trägergewebe 6 einlagig ausgebildet und weist vorzugsweise eine Leinwandbindung auf. Das heißt, die ersten Schussfäden 8a laufen über die ersten Kettfäden 7a und unter den zweiten Kettfäden 7b durch und die zweiten Schussfäden 8b laufen jeweils über die zweiten Kettfäden 7b und unter den ersten Kettfäden 7a durch. Sowohl die ersten als auch die zweiten Schussfäden 8a;8b sind also jeweils mit den ersten und zweiten Kettfäden 7a;b, also mit allen Kettfäden 7a;7b verwebt.

Im Bereich der Kanäle 12 dagegen teilen sich die ersten und zweiten Schussfädenpaare 13a;b wie folgt auf:
Die ersten Schussfädenpaare 13a gehen nur noch eine Bindung mit den ersten Kettfäden 7a ein und die zweiten Schussfädenpaare 13b gehen nur noch eine Bindung mit den zweiten Kettfäden 7b ein. Bzw. die ersten Schussfädenpaare 13a sind nur mit den ersten Kettfäden 7a verwebt und die zweiten Schussfädenpaare 13b sind nur mit den zweiten Kettfäden 7b verwebt. Die ersten Schussfädenpaare 13a und die ersten Kettfäden 7a sind dabei ebenfalls vorzugsweise durch eine Leinwandbindung gebunden. Gleiches gilt für die zweiten Schussfädenpaare 13b und die zweiten Kettfäden 7b. Die ersten und zweiten Schussfädenpaare 13a;b sind also jeweils nur mit jedem zweiten Kettfaden 7a;b verwebt.

Dadurch bilden die ersten Schussfädenpaare 13a mit den ersten Kettfäden 7a eine erste, insbesondere obere, Gewebelage 15a und die zweiten Schussfädenpaare 13b bilden mit den zweiten Kettfäden 7b eine zweite, insbesondere untere, Gewebelage 15b. Die beiden Gewebelagen 15a;b sind nicht miteinander verbunden, so dass zwischen den beiden Gewebelagen 15a;b die erfindungsgemäßen Kanäle 12 gebildet werden. Zudem sind die Gewebelagen 15a;b in Höhenrichtung 4c zueinander benachbart bzw. fluchtend angeordnet.

Für die erfindungsgemäße Verwendung ist es zudem vorteilhaft, wenn das Flächengebilde 1 elastisch ausgebildet ist. Vorzugsweise weist das Flächengebilde 1 eine maximale Dehnung bzw. Höchstzugkraft-Dehnung ε_{H} gemäß DIN EN ISO 13934-1:2013 von ≥ 100 %, vorzugsweise von 100 bis 500 % in die erste Flächenrichtung 4a und/oder in die zweite Flächenrichtung 4b auf.

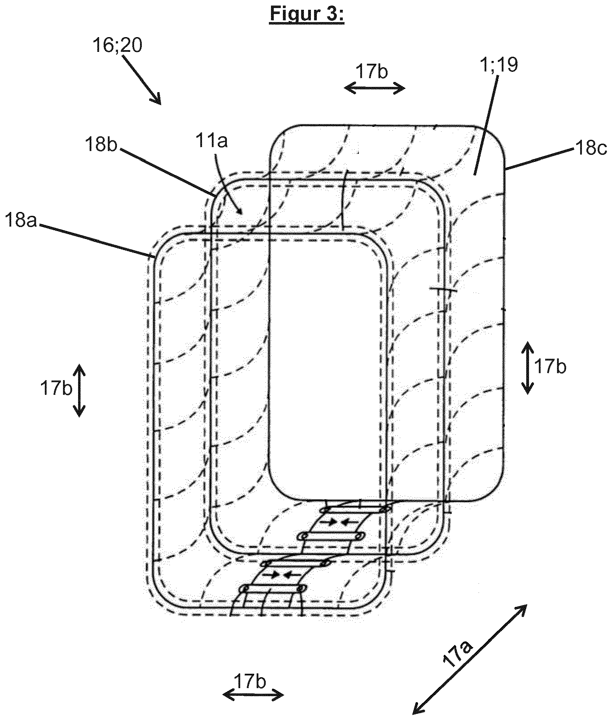

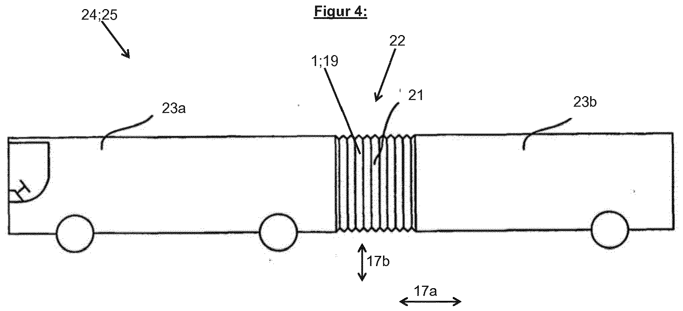

Wie bereits erläutert, wird das Flächengebilde 1 erfindungsgemäß für einen Übergangsbalg 16 verwendet (Fig. 3 und 4). Der Übergangsbalg 16 weist eine Balglängsrichtung 17a sowie eine dazu senkrechte Balgumfangsrichtung 17b auf. Zudem weist der Übergangsbalg 16 mehrere, in Balglängsrichtung 17a voneinander beabstandete, umlaufende, Balgspannrahmen 18a-c sowie eine zwischen die Balgspannrahmen 18a-c eingespannte Balgwandung 19 auf. Die Balgwandung 19 umgibt einen tunnelartigen bzw. kanalartigen Balginnenraum.

Bei dem Übergangsbalg 16 handelt es sich vorzugsweise um einen Wellenbalg 20 (Fig. 3) oder einen Faltenbalg 21 (Fig. 4). Im Fall des Wellenbalgs 20 ist die Balgwandung 19 in an sich bekannter Weise derart eingespannt, dass die Balgwandung 19 im unbelasteten bzw. ungedehnten Zustand des Wellenbalgs zwischen den Balgrahmen 18a-c durchhängt und dadurch zwischen den Balgrahmen 18a-c Wellen gebildet werden. Der Faltenbalg 21 weist in an sich bekannter Weise abwechselnd innere und äußere Faltenkanten auf, wobei die Balgwandung 19 an den Faltenkanten jeweils in einen Balgrahmen 18a-c eingespannt ist.

Gemäß der Erfindung besteht nun die Balgwandung 19 erfindungsgemäß aus dem Flächengebilde 1 und die Kanäle 12 dienen erfindungsgemäß zur Aufnahme der Balgrahmen 18a-c. Das heißt, die Balgrahmen 18a-c sind in den Kanälen 12 angeordnet. Bzw. jeweils ein Balgrahmen 18a-c ist durch einen Kanal 12 durchgeführt. Dadurch wird die Balgwandung 19 auf die Balgrahmen 18a-c aufgespannt bzw. zwischen diese eingespannt. Die Kanäle 12 erstrecken sich dazu beispielsweise in Balgumfangsrichtung 17b. Daraus ergibt sich, dass keine einzelnen Materialabschnitte in Form von Falten oder Wellen hergestellt werden müssen und über Balgrahmen verbunden werden müssen. Die Balgwandung 19 eines Übergangbalgs kann bspw. aus einem einzigen Materialabschnitt bestehen, wobei die Balgspannrahmen 18a-c in die Kanäle 12 eingezogen werden bzw. sind. Im Fall des Faltenbalgs 21 ist beispielsweise an jeder Faltenkante ein Balgrahmen 18a-c vorhanden.

Die Kanäle 12 erleichtern dabei die Montage des Übergangsbalgs 16 erheblich, da die Balgrahmen 18a-c lediglich durch die Kanäle 12 durchgeführt werden müssen. Ein aufwendiges Klemmen der Balgwandung 19 ist nicht erforderlich. Zudem kann die Balgwandung 19 aus einem Stück oder zumindest mehreren längeren Abschnitten bestehen und nicht aus vielen einzelnen Materialstreifen, wie dies bei bekannten Wellen- und Faltenbalgen der Fall ist. Denn bei bekannten Wellenbalgen ist in der Regel pro Welle ein Materialstreifen vorhanden und bei bekannten Faltenbalgen erstreckt sich jeweils ein Materialstreifen von Faltenkante zu Faltenkante.

Vorteil des erfindungsgemäß verwendeten Flächengebildes 1 ist zudem, dass es sich um ein kostengünstiges, leichtes Material handelt. Denn das erfindungsgemäße einlagige Trägergewebe 6 ist deutlich leichter als das vorbekannte, doppellagige Abstandsgewebe oder die aus zwei miteinander verklebten oder verschweißten textilen Lagen bestehende Materialbahn. Zudem ist das erfindungsgemäße Trägergewebe 6 einfacher herstellbar. Denn die Kanäle 12 werden direkt beim Verweben durch entsprechendes Anheben bzw. Absenken der einzelnen Kettfäden 7a;b hergestellt.

Des Weiteren sind der Verlauf und die Form der Kanäle 12 beliebig und frei wählbar. Insbesondere müssen sich die Kanäle 12 nicht parallel zur Kettrichtung 9 durch das Trägergewebe 6 durch erstrecken, sondern können sich auch schräg dazu oder senkrecht dazu, also parallel zur Schussrichtung 10, erstrecken. Auch können die Kanäle 12 kurvenförmig bzw. bogenförmig verlaufen. Zudem kann die Breite der Kanäle 12 über deren Länge unterschiedlich sein bzw. variiert werden. Denn ein derartiges Trägergewebe 6 ist durch gesteuertes Anheben und Absenken der Kettfäden 7a;b sehr einfach und problemlos sowie sehr variabel herstellbar.

Insbesondere erstrecken sich die Kanäle 12 somit zumindest bereichsweise nicht parallel zur Kettrichtung 9 des Trägergewebes 6.

Zudem ist es möglich, dass die beiden die Kanäle 12 seitlich begrenzende Kanallängskanten zumindest bereichsweise nicht zueinander parallel sind. Die Kanallängskanten werden am Übergang von den kanalfreien Bereichen 14 zu den Kanälen 12 bzw. am Übergang von den einlagigen zu den zweilagigen Gewebebereichen gebildet.

Im Rahmen der Erfindung wurde dabei überraschend festgestellt, dass es trotz der zweilagigen Gewebebereiche möglich ist, das Trägergewebe 6 mit der Polymerbeschichtung 3 zu beschichten, ohne dass das Polymer in die Kanäle 12 eindringt. Dies ist insbesondere deshalb überraschend, da die beiden Gewebelagen 15a;b weniger dicht, insbesondere nur halb so dicht, sind, wie die einlagigen Gewebebereiche 14. Denn die beiden Gewebelagen 15a;b weisen zwangsweise nur weniger, insbesondere nur halb so viel, Material auf wie die einlagigen Gewebebereiche 14. Im dargestellten Ausführungsbeispiel weisen die beiden Gewebelagen 15a;b jeweils nur halb so viel Kett- und Schussfäden 7a;b;8a;b wie die einlagigen Gewebebereiche 14 auf. Die Schussfadendichte und die Kettfadendichte der beiden Gewebelagen 15a;b (in Fäden pro Zentimeter) gemäß DIN EN 1049-2:1994-02 ist demensprechend halb so groß wie die Schussfadendichte und die Kettfadendichte der einlagigen Gewebebereiche 14.

Dennoch war es überraschenderweise möglich, das Trägergewebe 6 so zu beschichten, dass die Polymerbeschichtung 3 eine ausreichende Haftung zum Trägergewebe 6 aufweist, allerdings nicht in die Kanäle 12 eindringt. Die Gewebeoberseite 11a und die Gewebeunterseite 11b sind auch im Bereich der Gewebelagen 15a;b bzw. der Kanäle 12 somit ausreichend dicht. Bzw. die Gewebeoberseite 11a und die Gewebeunterseite 11 bilden auch im Bereich der Gewebelagen 15a;b eine geschlossene Oberfläche. Das heißt, die Kett- und Schussfäden 7a;b;8a;8b liegen auch im Bereich der Gewebelagen 15a;b aneinander, es werden keine Maschen gebildet (im Gegensatz zu den schematischen Darstellungen in Fig. 1 und 2).

Die Beschichtung erfolgt dabei vorzugsweise in an sich bekannter Weise, bevorzugt durch ein Streichverfahren, Kalandrieren, Extrusion, Formpressen oder Injection Moulding.

Selbstverständlich kann die Ausbildung der Kanäle 12 erfindungsgemäß auch durch andere Bindungsarten und Webtechniken als anhand des Ausführungsbeispiels beschrieben realisiert werden. Die Kett- und Schussfäden 7a;b;8a;b müssen erfindungsgemäß nur so miteinander verwebt werden, dass aus denselben Kett- und Schussfäden 7a;b;8a;b bzw. demselben Fadenmaterial die einlagigen, kanalfreien Gewebebereiche 14 und die zweilagigen Gewebebereiche mit den beiden jeweils einlagigen, miteinander nicht verbundenen, Gewebelagen 15a;15b gebildet werden.

Grundsätzlich kann dies auf unterschiedliche Art und Weise dadurch realisiert werden, dass ein erster Teil der Schussfäden 8a;8b nur mit einem ersten Teil der Kettfäden 7a;b und ein zweiter Teil der Schussfäden 8a;b nur mit einem zweiten Teil der Kettfäden 7a;7b verwebt ist. Bzw. die Kett- und Schussfäden 7a;b;8a;b der ersten Gewebelage 15a sind nicht mit den Kett- und Schussfäden 7a;b;8a;b der zweiten Gewebelage 15b verwebt.

Beispielsweise können die Schussfäden der einlagigen Gewebebereiche 14 in den zweilagigen Gewebebereichen auch in zwei, insbesondere gleich dicke, Schussfäden geteilt sein. Dabei können die geteilten und ungeteilten Schussfäden beispielsweise jeweils aus vielen Monofilamenten bestehen oder die ungeteilten Schussfäden bestehen aus zwei Monofilamenten und die geteilten Schussfäden bestehen aus einem Monofilament. Ein erster abgeteilter Schussfaden bzw. eine erste Schussfadenhälfte ist dabei mit den ersten Kettfäden 7a verwebt und der zweite abgeteilte Schussfaden bzw. die zweite Schussfadenhälfte ist mit den zweiten Kettfäden 7b verwebt. In diesem Fall ist die Kettfadendichte der Gewebelagen 15a;b ebenfalls halb so groß wie die Kettfadendichte der einlagigen Gewebebereiche 14. Die Schussfadendichte ist aber gleich, auch wenn die Schussfäden dünner sind.

In jedem der beschriebenen Fälle ist somit die Kettfadendichte der Gewebelagen 15a;b geringer als die Kettfadendichte der einlagigen Gewebebereiche 14.

Das Flächengewicht gemäß DIN EN ISO 2286-2:1998-07 der unbeschichteten Gewebelagen 15a;b ist zudem geringer als das Flächengewicht der unbeschichteten einlagigen Gewebebereiche 14. Dabei müssen die Flächengewichte der beiden Gewebelagen 15a;b nicht gleich sein. Das unbeschichtete Trägergewebe 6 weist bevorzugt ein Flächengewicht von 80 bis 1200 g/m² gemäß DIN EN ISO 2286-2:1998-07 auf.

Außerdem ist es im Rahmen der Erfindung möglich, in den Kanälen 12 auch andere Elemente als die Balgrahmen 18a-c, z.B. Beleuchtungselemente anzuordnen. In den Kanälen 12 können zudem, zumindest teilweise, auch Zugseile, insbesondere als Spannelemente, angeordnet sein.

Ein weiterer Vorteil der Erfindung ist die einfachere Fertigung da keine einzelnen Wellen/Falten aus einzelnen Stoffbahnen mehr gefertigt werden müssen.

Die aus dem erfindungsgemäßen Flächengebilde hergestellte Balgwandung weist zudem eine hohe Dichtigkeit auf, da sie aus einer durchgehenden Materialbahn gefertigt ist.

Die Balgwandung weist außerdem ein ansprechenderes Design auf. Zudem ist die Reinigung sehr einfach, da die Balgwandung eine glatte und dem Fahrzeug folgende Außenkontur aufweist.

Da die Balgrahmen zur Verbindung der Wellen/Falten entfallen können, ist die Gewichtersparnis enorm.

Der erfindungsgemäße Übergangsbalg 16 wird vorzugsweise für einen Übergang 22 verwendet, an dem zwei Fahrzeugteile 23a;b eines Fahrzeugs 24 relativ zueinander beweglich, insbesondere, gelenkig miteinander verbunden sind, um den Übergang 22 vor Wetter und Zugluft zu schützen. Bei dem Fahrzeug 24 handelt es sich vorzugsweise um einen Gelenkbus 25 oder ein Schienenfahrzeug, insbesondere einen Reisezug, eine Straßenbahn, eine Metro oder U-Bahn. Die beiden Fahrzeugteile 23a;b sind insbesondere um eine vertikale Drehachse relativ zueinander verdrehbar und/oder in Fahrtrichtung relativ zueinander verschieblich und/oder quer zur Fahrtrichtung verschieblich und/oder um eine Längsachse des Fahrzeugs (Wanken) drehbar miteinander verbunden.

Bei dem Übergangsbalg 16 kann es sich zudem auch um einen Übergangsbalg 16 zum Schutz des Übergangs einer Fluggastbrücke oder -treppe zum Flugzeug und/oder zum Terminal handeln.

Oder es kann sich um einen Übergangsbalg 16 zum Schutz des Übergangs zwischen zwei Gebäudeteilen, beispielsweise zum Schutz des Übergangs zwischen einer Brücke und einem Gebäudeabschnitt, handeln.

Im Rahmen der Erfindung liegt es dabei selbstverständlich auch, dass der Übergangsbalg 16 nicht einteilig ausgebildet ist, sondern z.B. aus zwei fest miteinander verbundenen Balghälften besteht. Die Balghälften sind jeweils im Querschnitt U-förmig ausgebildet. Infolgedessen weisen die beiden Balghälften jeweils zwei U-förmige Spannrahmenelemente auf, die im zusammengebauten Zustand jeweils einen umlaufenden Balgspannrahmen 18a-c bilden. Die Ausbildung des Übergangsbalges 16 aus zwei Balghälften ist an sich bekannt und erleichtert dessen Montage.

Gleichermaßen kann der Übergangsbalg 16 aus mehreren flächigen Balgelementen (nicht dargestellt) ausgebildet sein, welche jeweils zwei gerade Spannrahmenelemente aufweisen, zwischen denen ein erfindungsgemäßes Flächengebilde 1 eingespannt ist.

Auch kann das Flächengebilde 1 erfindungsgemäß als Wandung von Übergangselementen verwendet werden, welche zum Schutz eines Übergangs zwischen zwei relativ zueinander beweglichen Maschinenteilen oder anderen Bauteilen verwendet werden, um den jeweiligen Übergang vor äußeren Einflüssen, insbesondere Verschmutzung, zu schützen und gegenüber der Umgebung abzudichten. Das Übergangselement kann dabei unterschiedliche Formen aufweisen, z.B. eine flächige Form oder eine U-Form oder auch die Form eines Übergangsbalges. Zudem ist das Übergangselement analog wie beim Übergang 22 der beiden Fahrzeugteile 23a;b jeweils fest mit einem der beiden Bauteile verbunden.

Des Weiteren kann das Übergangselement, insbesondere der Übergangsbalg 16, bzw. dessen Wandung auch ungewellt und ohne Falten ausgebildet sein. In diesem Fall ist die Wandung, insbesondere die Balgwandung 19 entsprechend elastisch ausgebildet. Insbesondere ist die Wandung gemäß der deutschen Patentanmeldung DE 10 2011 107 370 A1 ausgebildet.

Vorzugsweise weist die Balgwandung 19 die oben angegebene Höchstzugkraft-Dehnung gemäß DIN EN ISO 13934-1:2013 auf.

Des Weiteren liegt es im Rahmen der Erfindung, dass der Festigkeitsträger 2 mehrschichtig ausgebildet ist und aus mehreren textilen Flächengebilden besteht, die jeweils miteinander mittels einer Haftschicht aus einem Polymer verbunden sind. Zumindest eines der textilen Flächengebilde ist das erfindungsgemäße Trägergewebe 6. Vorzugsweise besteht der Festigkeitsträger 2 aber aus dem Trägergewebe 6. Des Weiteren kann zwischen der Polymerbeschichtung 3 und dem Festigkeitsträger 2 auch eine Haftschicht aus einem Polymer vorhanden sein.

## Patentansprüche

1. Verwendung eines mehrschichtigen Flächengebildes (1) aufweisend einen Festigkeitsträger (2), der zumindest einseitig, vorzugsweise beidseitig, eine Polymerbeschichtung (3) aufweist, wobei der Festigkeitsträger (2) zumindest ein Trägergewebe (6) aus Kettfäden (7a;b) und Schussfäden (8a;b) aufweist, und wobei das Flächengebilde (1) zumindest einen sich durch das Flächengebilde (1) durch erstreckenden Kanal (12) aufweist,
und **dadurch gekennzeichnet, dass**
die Kett- und Schussfäden (7a;b;8a;8b) derart miteinander verwebt sind, dass das Trägergewebe (6) sowohl einlagige Gewebebereiche (14) als auch zumindest einen zumindest zweilagigen Gewebebereich mit zumindest zwei Gewebelagen (15a;b) aufweist, die nicht miteinander verbunden sind, so dass zwischen den Gewebelagen (15a;b) jeweils der Kanal (12) ausgebildet wird,
als Balgwandung (19) eines Übergangsbalgs (16), insbesondere eines Übergangsbalgs (16) in Form eines Wellen- oder Faltenbalgs (20;21).

2. Verwendung nach Anspruch 1,
**dadurch gekennzeichnet, dass**
die beiden Gewebelagen (15a;15b) jeweils miteinander verwebte Kett- und Schussfäden (7a;b;8a;b) aufweisen, wobei die Kett- und Schussfäden (7a;b;8a;b) der ersten Gewebelage (15a) nicht mit den Kett- und Schussfäden (7a;b;8a;b) der zweiten Gewebelage (15b) verwebt sind.

3. Verwendung nach Anspruch 1 oder 2,
**dadurch gekennzeichnet, dass**
im einlagigen Gewebebereich (14) alle Kett- und Schussfäden (7a:b;8a;8b) des Trägergewebes (6) miteinander verwebt sind.

4. Verwendung nach einem der vorhergehenden Ansprüche,
**dadurch gekennzeichnet, dass**
die Kett- und Schussfäden (7a;b;8a;8b) der Gewebelagen (15a;b) jeweils aus geteilten oder ungeteilten Kett- und Schussfäden (7a;b;8a;8b) der einlagigen Gewebebereiche (14) bestehen.

5. Verwendung nach einem der vorhergehenden Ansprüche,
**dadurch gekennzeichnet, dass**
die beiden Gewebelagen (15a;b) in eine Höhenrichtung (4c) des Flächengebildes (1) zueinander fluchtend angeordnet sind.

6. Verwendung nach einem der vorhergehenden Ansprüche,
**dadurch gekennzeichnet, dass**
die Schussfadendichte und/oder die Kettfadendichte der beiden Gewebelagen (15a;b) in Fäden pro Zentimeter gemäß DIN EN 1049-2:1994-02 jeweils geringer ist als die Schussfadendichte und/oder die Kettfadendichte der einlagigen Gewebebereiche (14) und/oder dass das Flächengewicht gemäß DIN EN ISO 2286-2:1998-07 der beiden Gewebelagen (15a;b) jeweils geringer ist als das Flächengewicht der einlagigen Gewebebereiche (14).

7. Verwendung nach einem der vorhergehenden Ansprüche,
**dadurch gekennzeichnet, dass**
der Festigkeitsträger (2) aus dem Trägergewebe (6) besteht.

8. Verwendung nach einem der vorhergehenden Ansprüche,
**dadurch gekennzeichnet, dass**
das Flächengebilde (1) eine Höchstzugkraft-Dehnung ε_{H} gemäß DIN EN ISO 13934-1:2013 von ≥ 100 %, vorzugsweise von 100 bis 500 % in die erste Flächenrichtung (4a) und/oder in die zweite Flächenrichtung (4b) aufweist.

9. Verwendung nach einem der vorhergehenden Ansprüche,
**dadurch gekennzeichnet, dass**
der Kanal (12) sich zumindest bereichsweise nicht parallel zu einer Kettrichtung (9) des Trägergewebes (6) erstreckt und/oder den Kanal (12) seitlich begrenzende Kanallängskanten zumindest bereichsweise nicht zueinander parallel sind.

10. Im Querschnitt kasten- oder U-förmig umlaufendes Übergangselement (16) zum Schutz eines Übergangs (22) von zwei relativ zueinander beweglich miteinander verbundenen Fahrzeugteilen (23a;23b) oder Bauteilen, insbesondere von zwei gelenkig miteinander verbundenen Fahrzeugteilen (23a;23b) oder Bauteilen, vor äußeren Einflüssen, wobei das Übergangselement (16) zumindest zwei zueinander beabstandete Spannelemente (18a-c) aufweist,
und wobei zwischen die beiden Spannelemente (18a-c) ein Flächengebilde (1) eingespannt ist,
wobei
das Flächengebilde ein mehrschichtiges Flächengebilde (1) ist, welches einen Festigkeitsträger (2), der zumindest einseitig, vorzugsweise beidseitig, eine Polymerbeschichtung (3) aufweist, aufweist, wobei der Festigkeitsträger (2) zumindest ein Trägergewebe (6) aus Kettfäden (7a;b) und Schussfäden (8a;b) aufweist, und **dadurch gekennzeichnet, dass** das Flächengebilde (1) sich durch das Flächengebilde (1) durch erstreckende Kanäle (12) aufweist, und wobei die Kett- und Schussfäden (7a;b;8a;8b) derart miteinander verwebt sind, dass das Trägergewebe (6) sowohl einlagige Gewebebereiche (14) als auch zumindest einen zumindest zweilagigen Gewebebereich mit zumindest zwei Gewebelagen (15a;b) aufweist, die nicht miteinander verbunden sind, so dass zwischen den Gewebelagen (15a;b) jeweils einer der Kanäle (12) ausgebildet wird,
wobei die Spannelemente (18a-c) jeweils in einem der Kanäle (12) angeordnet sind.

11. Übergangselement (16) nach Anspruch 10,
**dadurch gekennzeichnet, dass**
das Übergangselement (16) ein Übergangsbalg (16) ist, wobei der Übergangsbalg (16) zumindest zwei voneinander beabstandete Balgspannrahmen (18a-c) und eine Balgwandung (19) aufweist, die aus dem mehrschichtigen Flächengebilde (1) besteht, und die Balgspannrahmen (18a-c) in den Kanälen (12) angeordnet sind,
wobei vorzugsweise die Balgwandung (19) keine Wellen oder Falten aufweist oder der Übergangsbalg (12) als Wellen- oder Faltenbalg (20;21) ausgebildet ist.

12. Übergangselement (16) nach Anspruch 11,
**dadurch gekennzeichnet, dass**
der Übergangsbalg (16) zweiteilig ausgebildet ist und aus zwei miteinander verbundenen Balghälften besteht, die jeweils im Querschnitt U-förmig ausgebildet sind.

13. Übergangselement (16) nach einem der Ansprüche 10 bis 12,
**dadurch gekennzeichnet, dass**
die beiden Gewebelagen (15a;15b) jeweils miteinander verwebte Kett- und Schussfäden (7a;b;8a;b) aufweisen, wobei die Kett- und Schussfäden (7a;b;8a;b) der ersten Gewebelage (15a) nicht mit den Kett- und Schussfäden (7a;b;8a;b) der zweiten Gewebelage (15b) verwebt sind.

14. Fahrzeug (24), insbesondere Schienenfahrzeug oder Gelenkbus (25), aufweisend zumindest zwei an einem Übergang (22) relativ zueinander beweglich miteinander verbundene, bevorzugt miteinander gelenkig verbundene, Fahrzeugteile (23a;23b),
**dadurch gekennzeichnet, dass**
das Fahrzeug pro Übergang (22) zumindest ein den Übergang (22) schützendes Übergangselement (16), insbesondere einen Übergangsbalg (16), nach einem der Ansprüche 10 bis 13 aufweist.

15. Fluggastbrücke oder -treppe,
**dadurch gekennzeichnet, dass**
die Fluggastbrücke oder -treppe zumindest ein Übergangselement (16), vorzugsweise einen Übergangsbalg (16), nach einem der Ansprüche 10 bis 13 zum Schutz des Übergangs der Fluggastbrücke oder -treppe zum Flugzeug und/oder zum Terminal aufweist.

16. Gebäudeverbindung aufweisend zwei an einem Übergang miteinander verbundene Gebäudeteile,
**dadurch gekennzeichnet, dass**
die Gebäudeverbindung zumindest ein Übergangselement (16), vorzugsweise einen Übergangsbalg (16), nach einem der Ansprüche 10 bis 13 zum Schutz des Übergangs der beiden Gebäudeteile aufweist.

## Claims

1. Use of a multi-layered sheet material (1) comprising a reinforcing member (2), having a polymer coating (3) at least on one side, preferably on both sides, wherein the reinforcing member (2) comprises at least one backing fabric (6) made of warp threads (7a,b) and weft threads (8a,b), and wherein the sheet material (1) comprises at least one channel (12) extending through the sheet material (1), and
**characterized in that**
the warp and weft threads (7a,b; 8a; 8b) are woven together such that the backing fabric (6) comprises both single layer fabric regions (14) and at least one at least two-layer fabric region having at least two fabric layers (15a,b), which are not joined together, so that the channel (12) is each formed between the fabric layers (15a,b),
as a bellows wall (19) of a crossway bellows (16), in particular of a crossway bellows (16) in the form of a corrugated or pleated bellows (20; 21).

2. Use according to claim 1,
**characterized in that**
the two fabric layers (15a; 15b) each comprise warp and weft threads (7a,b; 8a,b) woven together, wherein the warp and weft threads (7a,b; 8a,b) of the first fabric layer (15a) are not woven with the warp and weft threads (7a,b; 8a,b) of the second fabric layer (15b).

3. Use according to claim 1 or 2,
**characterized in that**
in the single-layer fabric region (14) all warp and weft threads (7a,b; 8a; 8b) of the backing fabric (6) are woven together.

4. Use according to one of the preceding claims,
**characterized in that**
the warp and weft threads (7a,b; 8a; 8b) of the fabric layers (15a,b) each consist of divided or undivided warp and weft threads (7a,b; 8a; 8b) of the single-layer fabric regions (14).

5. Use according to one of the preceding claims,
**characterized in that**
the two fabric layers (15a,b) are arranged as aligned to each other in a height direction (4c) of the sheet material (1).

6. Use according to one of the preceding claims,
**characterized in that**
the density of the weft threads and/or the density of the warp threads of the two fabric layers (15a,b) in threads per centimeter according to DIN EN 1049-2:1994-02 is each less than the density of the weft threads and/or the density of the warp threads of the single layer fabric regions (14), and/or
the mass per unit area according to DIN EN ISO 2286-2:1998-07 of the two fabric layers (15a,b) is each less than the mass per unit area of the single layer fabric regions (14).

7. Use according to one of the preceding claims,
**characterized in that**
the reinforcing member (2) consists of the backing fabric (6).

8. Use according to one of the preceding claims,
**characterized in that**
the sheet material (1) has a maximum tensile elongation ε_{H} according to DIN EN ISO 13934-1:2013 of ≥ 100%, preferably of 100 to 500%, into the first surface direction (4a) and/or into the second surface direction (4b).

9. Use according to one of the preceding claims,
**characterized in that**
the channel (12) extends at least regionally in a non-parallel manner to a warp direction (9) of the backing fabric (6), and/or channel longitudinal edges delimiting the channel (12) laterally are at least regionally not parallel to each other.

10. A crossway element (16) formed in a box-like or U-shaped cross sectional manner, for protection of a passageway (22) of two vehicle parts (23a; 23b) or components, which are connected together movably relative to each other, in particular of two vehicle parts (23a; 23b) or components being interconnected in an articulated manner, against external influences, wherein the crossway element (16) comprises at least two tensioning elements (18a-c) being spaced apart from each other, and wherein a sheet material (1) is stretched between the two tensioning elements (18a-c), wherein the sheet material is a multi-layered sheet material (1) comprising a reinforcing member (2), having a polymer coating (3) at least on one side, preferably on both sides, wherein the reinforcing member (2) comprises at least one backing fabric (6) made of warp threads (7a,b) and weft threads (8a,b), and
**characterized in that**
the sheet material (1) comprises channels (12) extending through the sheet material (1), and wherein the warp and weft threads (7a,b; 8a; 8b) are woven together such that the backing fabric (6) comprises both single layer fabric regions (14) and at least one at least two-layer fabric region having at least two fabric layers (15a,b), which are not joined together, so that one of the channels (12) is each formed between the fabric layers (15a,b), wherein the tensioning elements (18a-c) are each arranged in one of the channels (12).

11. Crossway element (16) according to claim 10,
**characterized in that**
the crossway element (16) is a crossway bellows (16), wherein the crossway bellows (16) comprises at least two bellows supporting frames (18a-c) being spaced apart from each other and a bellows wall (19) consisting of the multi-layered sheet material (1), and the bellows supporting frames (18a-c) are arranged in the channels (12), wherein preferably the bellows wall (19) does not comprise corrugations or pleats, or the crossway bellows (12) is formed as a corrugated or pleated bellows (20; 21).

12. Crossway element (16) according to claim 11,
**characterized in that**
the crossway bellows (16) has a two-part design and consists of two bellows halves connected to each other, which each have a U-shaped cross section.

13. Crossway element (16) according to one of claims 10 to 12,
**characterized in that**
the two fabric layers (15a; 15b) each comprise warp and weft threads (7a,b; 8a,b) woven together, wherein the warp and weft threads (7a,b; 8a,b) of the first fabric layer (15a) are not woven with the warp and weft threads (7a,b; 8a,b) of the second fabric layer (15b).

14. Vehicle (24), in particular rail vehicle or articulated bus (25), comprising at least two vehicle parts (23a; 23b) connected together movably relative to each other, preferably connected to each other by articulation, at a passageway (22),
**characterized in that**
for each passageway (22), the vehicle comprises at least one crossway element (16), in particular a crossway bellows (16), according to one of claims 10 to 13 protecting the passageway (22).

15. Flight passenger bridge or staircase,
**characterized in that**
the flight passenger bridge or staircase comprises at least one crossway element (16), preferably a crossway bellows (16), according to one of claims 10 to 13 for protecting the passageway of the flight passenger bridge or staircase to the aircraft and/or to the terminal.

16. A building connection comprising two building parts connected together via a crossway,
**characterized in that**
the building connection comprises at least one crossway element (16), preferably a crossway bellows (16), according to one of claims 10 to 13 for protecting the passageway between the two building parts.

## Revendications

1. Utilisation d'une structure plate multicouche (1) présentant un support de résistance (2) qui présente au moins d'un côté, de préférence des deux côtés, un revêtement polymère (3), dans laquelle le support de résistance (2) présente au moins un tissu de support (6) en fils de chaîne (7a ; b) et fils de trame (8a ; b), et dans laquelle la structure plate (1) présente au moins un canal (12) s'étendant au travers de la structure plate (1),
et **caractérisée en ce que**
les fils de chaîne et de trame (7a ; b ; 8a ; 8b) sont tissés entre eux de telle manière que le tissu de support (6) présente non seulement des zones de tissu (14) à une couche mais aussi au moins une zone de tissu au moins à deux couches avec au moins deux couches de tissu (15a ; b) qui ne sont pas reliées entre elles de sorte que respectivement le canal (12) soit réalisé entre les couches de tissu (15a ; b),
comme paroi de soufflet (19) d'un soufflet de transition (16), en particulier d'un soufflet de transition (16) sous la forme d'un soufflet ondulé ou à pli (20 ; 21).

2. Utilisation selon la revendication 1,
**caractérisée en ce que**
les deux couches de tissu (15a ; 15b) présentent des fils de chaîne et de trame (7a ; b ; 8a ; b) tissés entre eux respectivement, dans laquelle les fils de chaîne et de trame (7a ; b ; 8a ; b) de la première couche de tissu (15a) ne sont pas tissés avec les fils de chaîne et de trame (7a ; b ; 8a ; b) de la seconde couche de tissu (15b).

3. Utilisation selon la revendication 1 ou 2,
**caractérisée en ce que**
tous les fils de chaîne et de trame (7a ; b ; 8a ; 8b) du tissu de support (6) sont tissés entre eux dans la zone de tissu (14) à une couche.

4. Utilisation selon l'une des revendications précédentes,
**caractérisée en ce que**
les fils de chaîne et de trame (7a ; b ; 8a ; 8b) des couches de tissu (15a ; b) se composent respectivement de fils de chaîne et de trame (7a ; b ; 8a ; 8b) divisés ou non divisés des zones de tissu (14) à une couche.

5. Utilisation selon l'une des revendications précédentes,
**caractérisée en ce que**
les deux couches de tissu (15a ; b) sont agencées s'alignant l'une sur l'autre dans un sens vertical (4c) de la structure plate (1).

6. Utilisation selon l'une des revendications précédentes,
**caractérisée en ce que**
la densité des fils de chaîne et/ou la densité des fils de trame des deux couches de tissu (15a; b) dans des fils par centimètre selon la norme DIN EN 1049-2:1994-02 est respectivement inférieure à la densité de fils de trame et/ou la densité de fils de chaîne des zones de tissu (14) à une couche et/ou
**que** le grammage selon la norme DIN EN ISO 2286-2:1998-07 des deux couches de tissu (15a ; b) est respectivement inférieur au grammage des zones de tissu (14) à une couche.

7. Utilisation selon l'une des revendications précédentes,
**caractérisée en ce que**
le support de résistance (2) se compose du tissu de support (6).

8. Utilisation selon l'une des revendications précédentes,
**caractérisée en ce que**
la structure plate (1) présente un allongement maximal à la traction ε_{H} selon la norme DIN EN ISO 13934-1:2013 de ≥ 100 %, de préférence de 100 à 500 % dans le premier sens plat (4a) et/ou dans le second sens plat (4b).

9. Utilisation selon l'une des revendications précédentes,
**caractérisée en ce que**
le canal (12) ne s'étend au moins par endroits pas parallèlement à un sens de chaîne (9) du tissu de support (6) et/ou des arêtes longitudinales de canal délimitant latéralement le canal (12) ne sont pas parallèles les unes aux autres au moins par endroits.

10. Élément de transition (16) périphérique en forme de caisson ou de U en section transversale pour la protection d'une transition (22) de deux parties de véhicule (23a, 23b) ou composants reliés entre eux de manière mobile l'un par rapport à l'autre, en particulier de deux parties de véhicule (23a ; 23b) ou composants reliés entre eux par articulation, contre des influences extérieures, dans lequel l'élément de transition (16) présente au moins deux éléments de serrage (18a-c) espacés l'un de l'autre,
et dans lequel une structure plate (1) est serrée entre les deux éléments de serrage (18a-c),
dans lequel la structure plate est une structure plate multicouche (1) qui présente un support de résistance (2) qui présente au moins d'un côté, de préférence des deux côtés, un revêtement polymère (3), dans lequel le support de résistance (2) présente au moins un tissu de support (6) en fils de chaîne (7a ; b) et fils de trame (8a ; b), et **caractérisé en ce que** la structure plate (1) présente des canaux (12) s'étendant au travers de la structure plate (1), et dans lequel les fils de chaîne et de trame (7a ; b ; 8a ; 8b) sont tissés entre eux de telle manière que le tissu de support (6) présente non seulement des zones de tissu (14) à une couche mais aussi au moins une zone de tissu au moins à deux couches avec au moins deux couches de tissu (15a ; b) qui ne sont pas reliées entre elles de sorte que respectivement un des canaux (12) soit réalisé entre les couches de tissu (15a ; b),
dans lequel les éléments de serrage (18a-c) sont agencés respectivement dans un des canaux (12).

11. Élément de transition (16) selon la revendication 10,
**caractérisé en ce que**
l'élément de transition (16) présente un soufflet de transition (16), dans lequel le soufflet de transition (16) présente au moins deux cadres de serrage de soufflet (18a-c) espacés l'un de l'autre et une paroi de soufflet (19) qui se compose de la structure plate (1) multicouche, et les cadres de serrage de soufflet (18a-c) sont agencés dans les canaux (12),
dans lequel de préférence la paroi de soufflet (19) ne présente aucune ondulation ou pli ou le soufflet de transition (12) est réalisé comme soufflet ondulé ou à pli (20 ; 21).

12. Élément de transition (16) selon la revendication 11,
**caractérisé en ce que**
le soufflet de transition (16) est réalisé en deux parties et se compose de deux moitiés de soufflet reliées entre elles qui sont réalisées respectivement en section transversale en forme de U.

13. Élément de transition (16) selon l'une des revendications 10 à 12,
**caractérisé en ce que**
les deux couches de tissu (15a ; 15b) présentent des fils de chaîne et de trame (7a ; b ; 8a ; b) tissés entre eux respectivement, dans lequel les fils de chaîne et de trame (7a ; b ; 8a ; b) de la première couche de tissu (15a) ne sont pas tissés aux fils de chaîne et de trame (7a ; b ; 8a ; b) de la seconde couche de tissu (15b).

14. Véhicule (24), en particulier véhicule ferroviaire ou bus articulé (25), présentant au moins deux parties de véhicule (23a ; 23b) reliées au niveau d'une transition (22) de manière mobile l'une par rapport à l'autre, de préférence reliées entre elles par articulation,
**caractérisé en ce que**
le véhicule présente, par transition (22), au moins un élément de transition (16) protégeant la transition (22), en particulier un soufflet de transition (16), selon l'une des revendications 10 à 13.

15. Passerelle ou escalier pour passagers,
**caractérisé en ce que**
la passerelle ou l'escalier pour passagers présente au moins un élément de transition (16), de préférence un soufflet de transition (16), selon l'une des revendications 10 à 13 pour la protection de la transition de la passerelle ou de l'escalier pour passagers au véhicule et/ou au terminal.

16. Assemblage de bâtiment présentant deux parties de bâtiment reliées entre elles au niveau d'une transition,
**caractérisé en ce que**
l'assemblage de bâtiment présente au moins un élément de transition (16), de préférence un soufflet de transition (16), selon l'une des revendications 10 à 13 pour la protection de la transition des deux parties de bâtiment.
